# EUROPEAN PATENT SPECIFICATION

(11) **EP 1 550 264 B1**
(45) Date of publication and mention of the grant of the patent: **22.09.2010**
(21) Application number: 03754318.8
(22) Date of filing: 09.10.2003
(51) Int. Cl.: H04L 12/28, H04W 92/02, H04W 88/08

(54) **OPEN ACCESS NETWORK ARCHITECTURE**
NETZWERKARCHITEKTUR MIT OFFENEM ZUGANG
ARCHITECTURE DE RESEAU A ACCES OUVERT

(30) Priority: 11.10.2002 NO 20024923
(43) Date of publication of application: 06.07.2005
(73) Proprietor: Telenor ASA, 1331 Fornebu (NO)
(72) Inventor: EDVARDSEN, Einar, Paul, N-1923 Sørum (NO); HOLTE, Nils, N-7033 Trondheim (NO)
(74) Representative: Neilson, Martin Mark
(86) International application number: PCT/NO2003/000339
(87) International publication number: WO 2004/034646

(56) References cited:
- EP-A1- 1 146 691
- WO-A-02/062094
- WO-A2-02/058324
- US-A1- 2002 046 179
- US-A1- 2002 085 516

## Description

### INTRODUCTION

The present invention addresses architectural issues related to methods of enabling countrywide coverage for broadband mobile communication based upon existing network resources.

### TECHNICAL BACKGROUND

Mobile networks are today based upon a combination of wireless (radio) and fixed network infrastructures. The wireless part is the network part people have in mind while communicating with their mobile telephones. This part of the connection does only reach between their wireless terminals and the base station located up to a few kilometres away (GSM). The rest of the connection is established through the fixed network, which may be composed of any kind of fixed network infrastructures (copper cables, optical fibre cables, radio links, etc). Since the "air is free of charge", most of the costs connected to establishing a mobile network is therefore connected to the establishment of the backbone network (or the feeder network), i.e. the fixed network mentioned above.

Another aspect of mobile communication is connected to the number of users and the bandwidth offered to each of them. Each base station is only able to provide a limited number of users the requested bandwidth. If the demand for bandwidth is higher than the traffic capacity of one base station, the number of base stations must be increased. However, since the frequency spectrum, which is dedicated for mobile communication is limited, new base stations cannot easily be established without reusing frequency bands already used by other and often vicinal located base stations. Therefore one may risk that a geographical area is covered by more than one base station using the same frequency band, i.e introducing interference. The interference problem can be solved by locating each base station optimally with respect to each other dependent on the distance between them, influence of topology, antenna directivity and also tuning the output power from each base station to a level that does not disturb other base stations.

The problems mentioned above are particularly relevant in the discussion of establishing UMTS (Universal Mobile Telecommunication System) networks because the number of UMTS base stations compared to the corresponding number of GSM base stations, will be much higher and consequently make the above problems even more severe.

In order to provide mobile broadband capacity, a very dense feeder network must be established to feed the thousands of base stations with sufficient bandwidth. Each of these base stations will possibly cover less than a square kilometre. Countrywide coverage is therefore unrealistic in the short-term, and it is more popular to talk about "hot-spots" instead of a complete coverage, i.e. broadband base stations located at public places, corporate areas or similar where people may connect their mobile communication devices like computers (PC), mobile phones, personal digital devices (PDA) to the network. The term "A public broadband mobile network" or 4^{th} generation mobile systems beyond UMTS may therefore be considered as something that may be offered in some distant future due to the investment related to establishing the required feeder network.

At the present time there does not exist cheap alternatives or strategies for how to establish countrywide and public broadband mobile networks without having to build dense feeder networks. Large infrastructures will have to be built.

The traditional network architecture together with some other related ideas/technologies are explained and visualised in the sub-sections below.

### The traditional architecture

This architecture is well known from all legacy wireless networks. To establish a broadband network, optical cables or radio links are the only realistic transmission media to be used. In order to connect all base stations, each located only 0,5 - 1 km from each other, huge infrastructures will therefore have to be established. The work to establish these has barely begun.

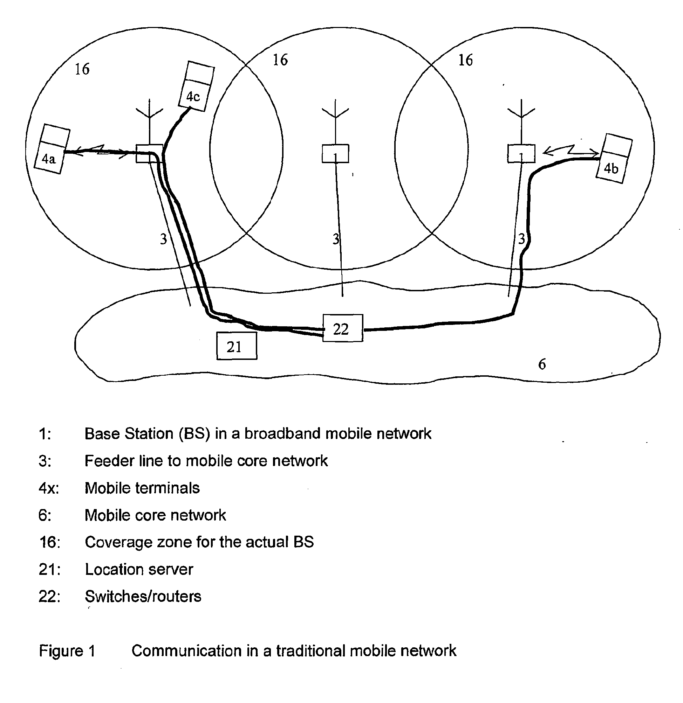

Figure 1 shows how a person-to-person connection is established in a traditional mobile network. Only the "local parts", i.e. the section from the user to the nearest base station is wireless. When a mobile terminal 4a, enters the coverage zone 16, of a base station 1, the terminal is automatically recognized and authenticated by location servers 21 in order to maintain updated records of the instantaneous locations of all terminals allowed to perform communication in the network. To establish communication between the two terminals 4a and 4b, in figure 1, each package of data sent between them in an IP (Internet Protocol) network, must contain the complete destination address. This destination address is detected in the network by IP routers, which transfer the data packet to the next one until it reaches the destination user. In an ATM (Asynchronous Transfer Mode) network a communication path through a number of ATM switches (the network) is set up first. All data packages relevant to this communication session are then sent along this path. Even in the case where two users located within the same radio zone are communicating with each other, the connection between the two users will be established from a terminal 4a, over a base station 1, over the feeder line 6, through a switch/router 22, and back again over the same feeder line 3, the same base station 1, and to the second terminal 4c.

The terms **P2P and Ad Hoc** are interpreted as being protocols that make it possible to establish self-organizing networks of communication devices such as computers (PCs, laptops) mobile phones, personal digital assistants (PDA), printers, storage devices, etc. and making them able to communicate with each other directly. The various devices may in principle be wired together, but the terms are today often associated with short-haul wireless communication. Compared to a traditional data network (clientlserver) where a client always communicates via the server with the other devices, central servers do not exist in pure P2P and Ad Hoc networks.

Ad Hoc protocols perform routing algorithms to establish a route from the originator to the destination without any initial knowledge about where to find the addressee. Examples of protocols are Bluetooth and various IETF (Internet Engineering Task Force) routing protocols.

P2P protocols run on the top of IP protocols and enable self-organization of communicating devices connected to an IP network. P2P is today in widely use, applications and protocols for sharing of, for instance mp3 files. In order to establish communication in a P2P network, all devices must run the same P2P protocols and application.

Both Ad Hoc and P2P networks will normally have some kind of connection to the legacy network in order to reach more customers.

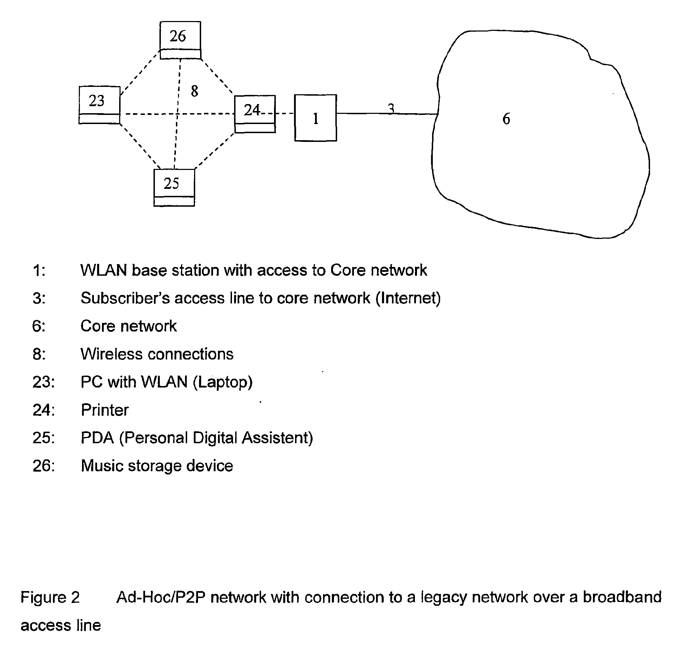

An example of such a network is shown in Figure 2 where four wireless devices, a Laptop (23), a printer (24), a PDA (25) and a music storage device (26) are connected wireless together. The printer (24) has a wireless connection to the WLAN base station with access to the core network (1) via the access line (3). It is implicitly understood that the reach of each device is limited to the nearest neighbouring device. One scenario of utilisation is that the PC (23) is connected to Internet (6), but since the PC is outside the reach of 1, the signals are relayed via 26, 24 and 1. The PC (23) may also use the printer via 26 or 25 at the same time as the PDA (25) has access to the Microsoft Outlook calendar, which is running on the PC (23). Other scenarios can also be drawn.

### Hot-spots

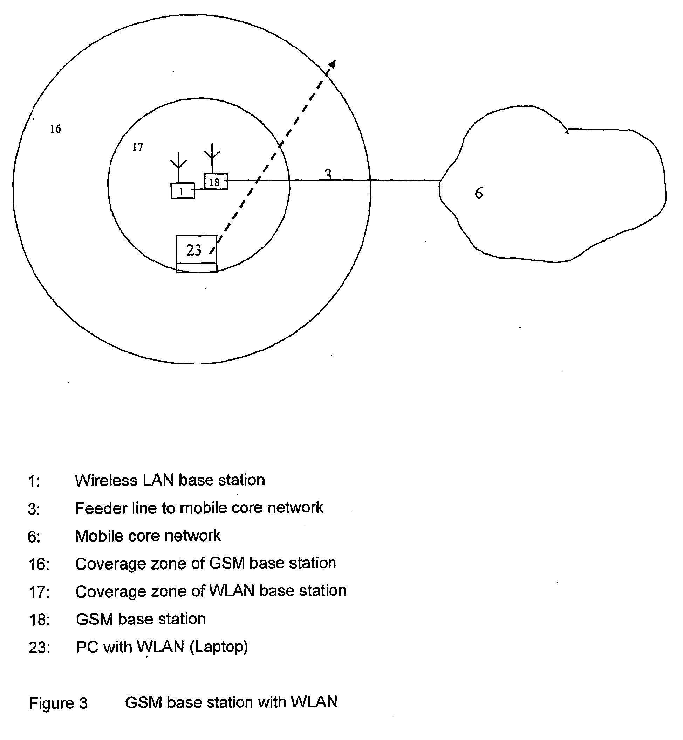

Wireless LAN has become a cheap and popular technology presently. The idea of building nationwide networks of hot-spots is a trend-in-time at the present. For instance, traditional mobile operators are presently establishing interconnection of hot-spots by integrating WLAN base stations with their GSM base stations, see Figure 3, which depicts a GSM base station (18) and a wireless LAN base station (1) installed in the same location and their respective coverage zones 16 and 17. A mobile user with a PC with WLAN interface card (23) is crossing the zones along the dotted arrow. Inside the coverage zone of the wireless LAN (17) he is communicating with the Internet over base station 1 and the access line 3. When the user is leaving coverage zone 17 while still being within the coverage zone 16, the user's PC detects loss of wireless LAN signal and presence of GSM signal, after which his connection to the Internet (6) is transferred to the GSM network. Another initiative worth mentioning is the Project Rainbow formed by Intel, IBM, AT&T Wireless, Verizon Communication and Cingular Wireless, who also plan to create nationwide networks of hot-spots for Internet access. In both cases will the feeder networks be realised in a traditional manner with dedicated lines/connections to the base stations.

WO 02 058324 relates to an apparatus, and an associated method, for providing WLAN service through a fixed wireless access communication system. WLAN transceivers are fixed in position at subscriber stations of the fixed wireless access communication system. Each WLAN transceiver defines a coverage area. Through appropriate positioning of the WLAN transceivers at the subscriber stations, overlapping coverage areas are formable and between which handovers of communications with a mobile station are effectuated when a mobile station travels out of one coverage area and into another coverage area.

EP1 146 691 relates to a telecommunication network including a fixed network for the routing of signals coming from voice and/or data; at least one station suitable for radio communication with user equipment equipped with transceivers; at least one controller of said station connected to said fixed network.

### SUMMARY OF THE INVENTION

The objective of the invention is to enable broadband mobile communication over the fixed broadband access network infrastructure by offering the subscribers of the fixed broadband network wireless LANs that are connected to the fixed broadband network via Home Network Units. The Home Network Units function as interconnection units between the public broadband network and the wireless sphere provided by the wireless LANs.

According to a first aspect the invention provides a method of using a wireless Local Area Network (LAN) for providing access to a fixed, broadband network to roaming mobile terminals via said wireless LAN, said wireless LAN being connected to a broadband access line of said broadband network, the method comprising: dividing a bandwidth of said wireless LAN and the broadband access line into respectively at least two channels; allocating a first of said at least two channels to the provision of network access to terminals of a fixed subscriber; and allocating a second of said at least two channels to the provision of wireless network access to said mobile terminals.

In an embodiment the bandwidth of the wireless LAN and the broadband access line of a fixed subscriber may be divided into respectively at least two separate channels, wherein a first channel is used by the fixed subscriber and a second channel is made available for the casual passing mobile terminals. The at least two channels may be dynamically dimensioned dependent on the fixed subscriber's instantaneous traffic in the wireless LAN and over the broadband access line, wherein the remaining bandwidth is made available for passing mobile terminals.

The remaining bandwidth/second channel may include the portion of the physical realisable bandwidth not subscribed for by the fixed subscribers, the portion of the bandwidth subscribed for, but instantaneously unused by the fixed subscriber and the bandwidth that may be released due to priority mechanisms implemented in the network.

The home network means and the broadband access network may perform security and authentication functions securing the fixed subscriber and the passing mobile terminals against tapping and illegal use of said broadband network. Protocols in the home network means and in said fixed network may also be provided for performing mobility, handover and roaming procedures.

In a second aspect the invention provides a digital mobile broadband network providing mobile or nomadic broadband services based on an existing fixed, broadband network connected to at least one wireless local area network (LAN), each of said at least one wireless LAN being connected via a broadband access line to said broadband network, wherein a bandwidth of said wireless LAN and broadband access line is divided into at least two channels, a first of said at least two channels being allocated to the provision of network access to terminals of a fixed subscriber and a second of said at least two channels being allocated to the provision of wireless network access to roaming mobile terminals.

In an embodiment the bandwidth of the wireless LAN and the broadband access line is divided in at least two separate channels, a first channel being used by the subscriber and a second channel publicly available for the casual passing mobile terminals. The at least two channels may be dynamically dimensioned dependent on instantaneous traffic for the fixed subscriber in the wireless LAN and over the broadband access line. The remaining bandwidths of the said wireless LAN and access line are made available for the passing mobile terminals.

The channel for passing mobile terminals may in an embodiment comprise the portion of the physical realisable bandwidth not subscribed for by the fixed subscriber, the portion of the subscribed bandwidth not instantaneously used by the fixed subscriber and the bandwidth released due to the priority mechanisms implemented in the network. Security and authentication functions securing the fixed subscriber and the passing mobile terminals against tapping and illegal use of said broadband network may be performed by the home network means and/or by the broadband network. The home network means and said fixed broadband access network include protocols for performing mobility, handover and roaming procedures.

In a third aspect the invention provides a home network device for separating traffic generated by terminals of a subscriber of a fixed, broadband network from traffic generated by roaming mobile terminals, said device being connected to said broadband network via a broadband access line, said device comprising: a wireless Local Area Network (LAN) for providing network access to said terminals of said subscriber and network access to roaming mobile terminals; and appropriate traffic and control functions comprising a resource management system and multiplexer means adapted to divide a physical available bandwidth of the wireless LAN and the broadband access line into at least two channels: a first channel allocated to traffic generated by terminals of said subscriber and a second channel allocated to traffic generated by roaming mobile terminals.

The home network device may in a further embodiment include a resource management system and multiplexer means dividing a physical available bandwidth of the wireless LAN and the broadband access line into at least two channels, a first channel to be used by the subscriber and a second public channel available for the casual passing mobile terminals. A resource management system may be implemented to perform dynamical bandwidth allocation to the casual passing mobile terminals dependent on the fixed subscriber's instantaneous traffic load on the wireless LAN and over the broadband access line. Switching/routing means may also be included in the home network unit for passing traffic to and from the broadband access network and the different wireless terminals located within the reach of the wireless LAN. Protocol means provides seamless mobility and handover procedures for maintaining the connection to the fixed broadband access network for a mobile terminal passing subscriber wireless LANs. The protocol means may provide roaming between different fixed, network operators, P2P/Ad-Hoc operators and individual subscriber LAN. Further, functions/program means supporting the broadband network's management and charging requirements may also be included in the home network unit.

In a further aspect the invention provides use of a home network device comprising at least a wireless LAN and a subscriber's broadband access line to a public broadband access network providing local wireless communication for the fixed subscriber and mobile broadband services to casual passing wireless terminals.

The above is summarized as follows:
1. Enabling the unused bandwidth of privately managed wireless LANs available for public use to access the fixed broadband network.
2. Building a broadband feeder network for the above wireless LANs, by utilising the unused bandwidth of the subscribers' broadband access lines to the fixed broadband network. This unused bandwidth may consist of
   a. Bandwidth not subscribed for by the above subscribers
   b. The part of the bandwidth subscribed for, but not momentarily used by the subscribers
   c. Bandwidth that possibly can be released following priority mechanisms implemented in the network.
3. Introducing a Home Network Unit at the premises of the fixed broadband network's subscribers, which functions as a bridge between the wireless LAN and the broadband access line and adds the necessary network functionality to the concept that shall enable seamless mobility, hand-over, resource management, switching and routing, quality of service guarantees, security, authentication and charging features.

As the invention partly relies on infrastructure that already exists or will be established for other purposes, the invention represents a path-breaking new approach to establishing networks for mobile broadband communication, compared to **the traditional method** as explained above.

An additional aspect of the invention is the possibility to include wireless **Ad Hoc** and **peer-to-peer** protocols into the concept. These technologies will enhance the concept by tying together wireless zones and making them connected through shared, spontaneous or on-demand use of fixed access lines. Hence, fewer base stations are needed to reach full coverage of a geographical area.

Compared to **hot-spots,** a popular business idea of today, the invention brings in the idea of providing exclusive feeder capacity to hot-spot base stations over the existing subscribers' access lines to the public broadband network. The above described traffic management and control functions will ensure communication quality. During time, while the number of base stations increases and forms dense and overlapping areas, the network will evolve, towards the Open Access Network as described by this invention.

The main objective of P2P and Ad Hoc networks, as explained above, is to establish self-configuring wireless communication between wireless devices.

P2P and Ad Hoc networks, however, do not address the objective of establishing infrastructures (feeder networks) for wireless broadband networks in other ways than persuading the users of the P2P and Ad Hoc networks to offer the subscribed part of the public access lines' capacity to the disposal for other P2P and Ad Hoc users. The un-subscribed part of the bandwidth of the fixed broadband access line is neither accessible for the fixed network's subscribers nor for other members of the P2P and Ad Hoc user groups. It is therefore impossible for them to establish networks based upon these resources.

By utilising mobile Ad Hoc and peer-to-peer protocols in a new, innovative network architecture, great advantages may be achieved. The apparent size of the wireless zones may be increased substantially. Each mobile device inside the zone will act as a new base station and add its own coverage zone to the rest, thus the distance reachable from a Home Network Unit will increase and accordingly drain more traffic into the fixed broadband network. Such Ad Hoc networks based upon a diversity of mobile devices may cover areas including more than one fixed line subscriber, thus a number of broadband access lines may be accessible for Ad Hoc users. Since all these access lines provide public broadband access, the Ad Hoc users will have the choice to select the one, which is performing best according to his requirement as regards capacity, quality and price.

### BRIEF DESCRIPTION OF DRAWINGS

Embodiments of the invention will now be described with reference to the following drawings, in which:
- Figure 1: illustrates communication in a traditional mobile network,
- Figure 2: shows an Ad Hoc/P2P network with connection to a legacy network over a broadband access line,
- Figure 3: shows a GSM base station with wireless LAN,
- Figure 4: illustrates a network with mobile broadband services according to an em- bodiment of the invention,
- Figure 5: is a schematic drawing of the main components of a network according to an embodiment of the invention,
- Figure 6: is a block diagram of the functionalities of a Home Network Unit accord- ing to an embodiment of the invention, and
- Figure 7: is a scenario description similar to figure 5, but enhanced with the functio- nality modules of the Home Network Unit.

### DETAILED DESCRIPTION

The main objective of the invention is to enable broadband mobile communication over the fixed broadband access network infrastructure by offering the subscribers of the fixed broadband network wireless LANs that are connected to the fixed broadband access line via Home Network Units. The Home Network Units perform the routing/switching and traffic functions that are needed to bridge traffic over the subscriber's broadband access line and wireless LAN and to provide public access for the mobile users over these wireless LANs. The communication from respectively the fixed subscriber and the casual passing mobile user is transferred over two separate channels in order to comply with security and privacy requirements.

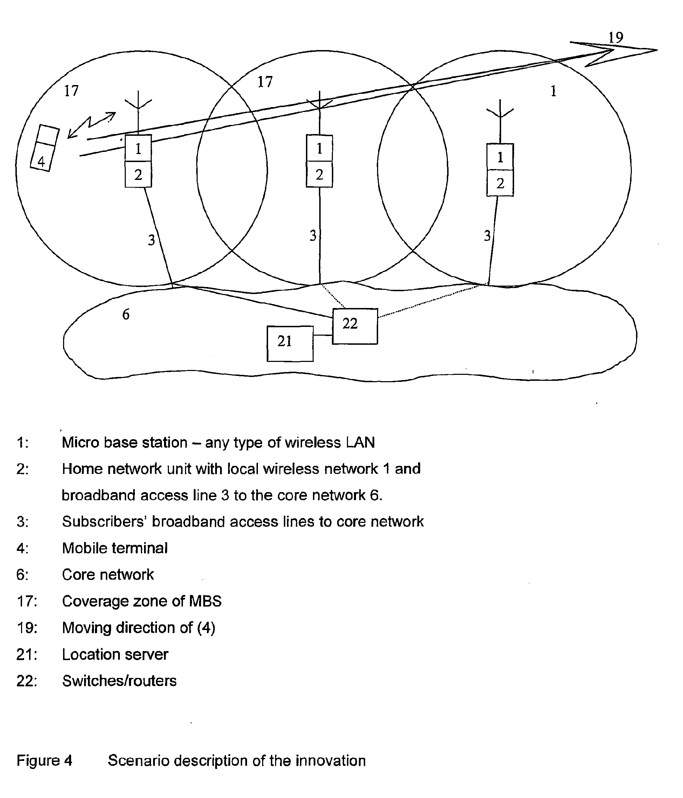

Figure 4 illustrates a usage scenario in the mobile broadband network according to an embodiment of the invention. Three wireless LANs (Micro base stations) 1 with corresponding Home Network Unit 2 are installed at three different, close by located subscribers (households) of a broadband network. The broadband access lines 3 to the households are realised by use of ADSL/VDSL/optical cable/cable modem or similar. The micro base stations 1 are based upon some kind of wireless LAN technology, for instance WLAN (IEEE 802.11x) used as a home network, connecting different domestic devices such as PCs, TVs, printers, servers, etc. The three wireless LANs partly overlap each other. Since the stationary users seldom neither subscribe to the complete capacity of an access line, nor utilises all subscribed capacity of the access lines and their micro base stations, there will normally exist spare capacity free for casual users. This spare capacity is therefore opened up for public use. Thus, a mobile user with a mobile terminal 4 entering from left in Figure 4, can be connected to the legacy network via the stationary users micro base station 1, the Home Network Unit 2 and the broadband access line 3. When the user leaves the first coverage zone 17 and enters the next, the connection to the legacy network is handed over from one Home Network Unit 2 to the next. The required mobility issues are solved by implementing appropriate protocols for seamless mobility, hand-over procedures, roaming between different broadband service providers, eventually also roaming between private owners of broadband access lines. Quality of service guarantees, security and authentication and charging features are also part of the concept.

The following bandwidth resources are required to realise a mobile broadband network according to the invention:
1. Free capacity of existing customers' wireless LANs as 'micro base stations' (MBS) in the network
2. Free capacity of the subscribers' broadband access lines to the fixed network as feeder lines to the above MBSs. The free capacity may consist of
   - The un-subscribed part of the physical realisable capacity of these lines
   - The instantaneous and un-used part of the subscribed capacity
   - Already allocated bandwidth that can be release through priority mechanisms

### Free capacity of wireless LANs

An objective of the invention is that casual passing mobile users are offered access to the fixed broadband network via wireless LANs installed at the subscribers' premises in the said network. The wireless LAN technology to be used is not specified. The following brief evaluation is based upon general information about wireless LAN technologies.

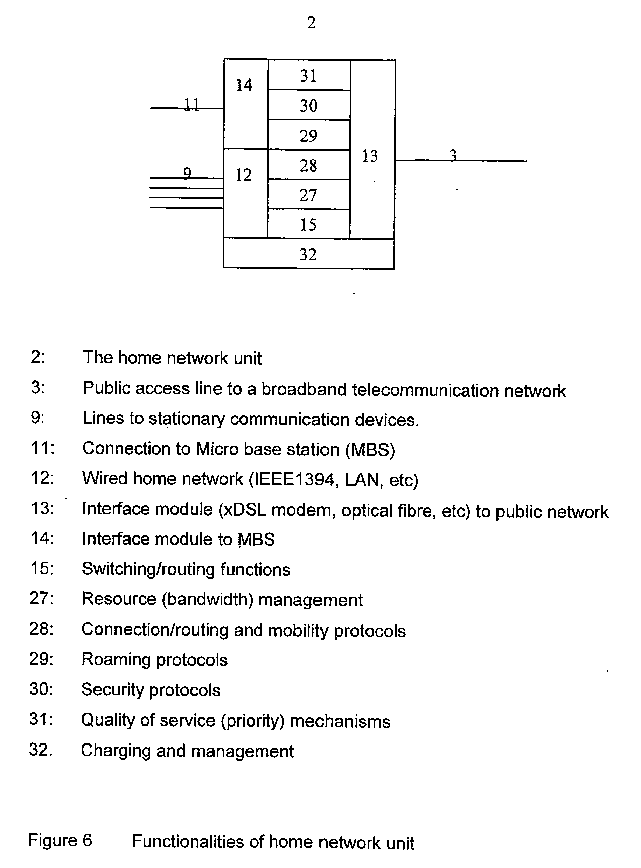

It is the intention that the stationary users shall have priority to the wireless LAN unless other arrangements are valid. The priority mechanisms are performed by module 31 of figure 6 below. Encryption algorithms must be deployed to ensure privacy over the air.

The capacity offered to the casual passing users is limited to the maximal capacity of the wireless LAN at a given distance from its base station. At an output power of 100 mW such wireless technologies have a nominal reach of about 30 metres (54 Mbit/s) or 100 metres at lower speed. However, due to error correction algorithms, etc, the net capacity is only about 50 % of this, i.e. the maximal capacity that can be offered to mobile users is less than 25 Mbit/s dependent on distance and traffic load.

### Free capacity of subscribers broadband access lines

### Allocation of unsubscribed capacity

A second objective of the invention is the use of un-subscribed bandwidth of broadband access lines. The physical access lines have often more transmission capacity than the capacity offered to and subscribed by the users. This un-used capacity is sometime unavailable both for the broadband operator as well as for the users due to the technical realisation of network components. This is particular relevant for access lines based upon DSL technologies (Digital Subscriber Line). In the case of ADSL (Asymmetrical DSL), a modem technology which is widely used today, the subscribers often subscribe for less than 1 Mbit/s downstream capacity, while the modem itself may have downstream capacity of 3-8 Mbit/s. Commercial equipment today does not have the ability to make this wasted capacity (2-7 Mbit/s wasted capacity) available neither for the operator nor for subscribers, even though it from a technical point of view easily can be done. Functions of the Home Network Unit (module 27 of figure 6) perform this feature.

The same evaluation can be done also for other types of technologies. An optical cable has near un-limited bandwidth, only restricted by other telecommunication equipment. Only a fraction of the physical realizable bandwidth is used. The far greatest part is wasted. Due to the hierarchical structure of the multiplexer systems, the same consideration can be done in this case. If a user needs a capacity of 50 Mbit/s for communication purposes, he will normally have to order a capacity of 155 Mbit/s due to the hierarchical structure of the systems as mentioned above. 105 Mbit/s is wasted capacity, which theoretically can be used for other purposes.

### Policy managed allocation of the subscribed bandwidth

A user will seldom use all the capacity he has subscribed for. If the subscription is 1 Mbit/s, and he at a certain moment time only uses 300 kbit/s, the remaining 700 kbit/s can be resold to casual passing users. However, in order to resell this capacity to other users, the terms must be defined in an agreement between the stationary user and the broadband provider. The Home Network Unit, module 27, performs this function.

### Released capacity through priority mechanisms

In general it is natural to agree that the stationary users shall have the highest priority to the available resources of the wireless LAN and the corresponding broadband access line. However, there are cases where this is not natural. If a casual passing user, which is running an application with certain requirements to bandwidth and transmission delays, enters a coverage zone unable to take over the connection, it may be rational to reduce the performance of stationary user's running low-priority services in order to release sufficient capacity for the mobile user. Such priority mechanisms are performed by module 31 of Figure 6.

### Functionalities of the Home Network Unit

The main functions performed by The Home Network are:
- Routing/switching connections over the physical interfaces; the public broadband access line, the wireless LAN and the wired home network
- Resource management to keep track with the usage of all available bandwidth resources, i.e. allocation of
   - Bandwidth in the wireless LAN
   - Unsubscribed bandwidth over the public access line
   - Policy managed subscribed bandwidth over the public access line
   - Bandwidth released through priority mechanisms
- Perform seamless mobility and hand-over procedures
- Realise roaming between different operators and between different owners of wireless LAN and access lines
- Perform access control, authentication and security procedures
- Comply with quality of service targets
- Implement required charging and management functions

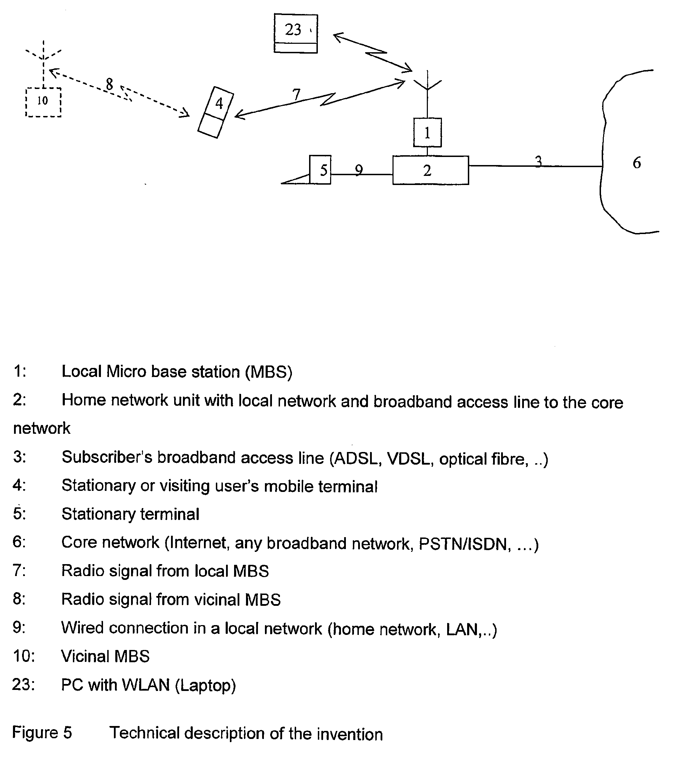

Figure 5 illustrates a Home Network Unit 2 connected to a broadband network 6 over a broadband access line 3. The stationary user is visualised by a terminal 5, which is connected to a local network over a fixed wired line 9. A wireless LAN base station, hereinafter called "Micro base station (MBS)" 1 is integrated with 2. A stationary terminal 5, for instance a printer, owned by the stationary user, is connected to the Home Network Unit over a wired connection 9. The stationary user also possesses a PC with a wireless LAN interface card 23, which is included in the network. The scenario indicated in this figure depicts that the stationary user can use the printer 5 from his PC 23 and communicate with the public network 6 simultaneously as a mobile user 4 is using spare capacity of the MBS 1 and the access line 3 to the core network 6. An aspect of the invention is that the local devices, in this case the PC 23 and the printer 5, shall not be made available for the mobile user unless the stationary and the mobile users are members of the same P2P or an Ad Hoc network. A main objective is to separate the private sphere from the public sphere, thus the stationary user is unaware of any mobile users who are passing. The mobile user on his side shall be unaware of the identity of the stationary users he is visiting. Figure 5 further indicates that the mobile user 4 also is covered by the vicinal base station 10, over which he can be connected to the core network, if for instance, the bandwidth offered by Home Network Unit 2 is insufficient.

The functionalities needed to implement a broadband mobile network according to this invention, will normally be performed by different network components. For instance, a function that is initiated by the Home Network Unit will have its counterpart in other devices in the public access and core network. The following description of the Figure 6 will mainly focus on high-level functions needed to implement the invention, and not go into details on how and where they are performed. Most of them are known features present in many data and telecommunication networks, and are not peculiarities of the invention.

Figure 6 shows a functional drawing of the Home Network Unit 2. The different modules functions as follows:
**Module 15** contains the routing/switching functions. This module, which may be based upon IP (Internet Protocol) or ATM (Asynchronous Transfer Mode), performs traffic routing/switching between the physical interfaces, i.e. between the public access line, 13/3, the micro base station, 14/11 and the wired home network, 12/9. The module for connection/routing and mobility protocols, 28 controls module 15.
**Module 27** performs resource management, i.e. keeps track of the total available bandwidth, the usage of bandwidth and the resulting free bandwidth on each of the physical interfaces, 12, 13 and 14. The module ensures that the stationary user is given priority to the bandwidth he has subscribed to according to the contract with the service and network provider. The module distinguishes between the bandwidth allocated by the stationary subscriber and the bandwidth offered to public users. The public offered bandwidth might be composed by the part of
   - The physical available bandwidth not subscribed by the stationary user
   - The traffic load dependent part of the subscribed bandwidth, which instantaneously not is used by the stationary subscriber
   - Eventually bandwidth allocated to the stationary user, but due priority rules and contractual agreements between the stationary user and the network provider, can be released and re-allocated to mobile users.
   The module receives information from module 28, Connection/routing and mobility protocols, which informs about establishment and termination of routes/connections and the corresponding involved bandwidth.
**Module 28,** Connection/routing and mobility protocols runs the necessary protocols needed to establish, to perform seamless mobility and hand-over procedures and to terminate routes/connections in the network. These protocols are defined by standards issued by a number of international standardisation bodies like ETSI (European Telecommunication Standardisation Institute), ITU (International Telecommunication Union), IETF (Internet Engineering Task Force) and many others.
**Module 29,** Roaming protocols perform the procedures that are needed when users want to use telecommunication resources owned by other service- and network providers than the ones each individual user has agreements with. For instance, when a mobile user moves from MBS1 (Micro base station) owned by network provider A to MBS2 owned by network provider B. The protocols execute the contract, which is ruling the commercial agreement between them. Roaming protocols are also activated during authentication processes.
**Module 30,** Security protocols perform authentication, access control of users entering the coverage zone of the MBS and data protection mechanisms. A user initiating a communication session must authenticate him to the service and network providers he subscribes to, before the connection can be established and the requested service is offered. If the session initiation happens in zone covered by another network provider, the roaming protocols, module 29, will mediate the authentication procedure. The protocols perform encryption of sensitive data used by these procedures to avoid illegal intrusion and interception.
**Module 31,** Quality of service (priority) mechanisms contains functions, which ensure that the services provided to the users comply with relevant requirements. For instance, voice communication is sensitive to data transmission delay and bandwidth limitations and relatively insensitive to transmission errors. Data communication on the other side, often accepts delay and bandwidth restrictions, but is sensitive to transmission errors. Priority and queuing mechanisms is used to give priority to voice communication, while error correction protocols are used to protect data.
**Module 32,** Charging and management contains functions related to the technical handling and maintenance of the unit, performance monitoring and usage monitoring to support charging functions needed by accounting reasons.
**Module 13,** Public network interface performs the signal conditioning needed to transfer signals over the physical line (3) to the public network. If the physical line is a telephone cable, the conditioning function will be performed by an xDSL modem. For an optical cable it is an optical interface, and for a wireless solution it would have been some kind of wireless interface.
**Module 12,** Wired home network performs switching/routing of local traffic over the wired in-house network (9). There exists many different protocols and standards for such networks, for instance IEEE 1394 (Firewire), Ethernet, HomePNA, etc.
**Module 14** is the interface to the Micro base station (MBS), which in this figure is excluded, but could be an integral part of the Home Network Unit 2.

Re-using existing wired and unwired infrastructures represents an important opportunity to establish a broadband mobile network at much lower cost than any known alternative. Since the infrastructure exists or is presently being established, a broadband mobile network may be realised much earlier than if a new, dedicated network infrastructure has to be built.

The idea of opening up the wireless LANs and the access lines is a new concept and a brilliant way to establish a broadband mobile/nomadic network with potentially 100% coverage in urban areas and spot-wise coverage in other areas.

By establishing a network infrastructure based upon the invention, installation of communication devices in the stationary customers' premises will not be restricted by their respective wireless LANs coverage zones. The subscribers may as well connect a device on locations better covered by neighbour's wireless LAN than by their own. With other words, the subscribers will experience an almost location-independent world. The stationary users may be located anywhere without restriction, and the mobile user may move nearly unrestricted around.

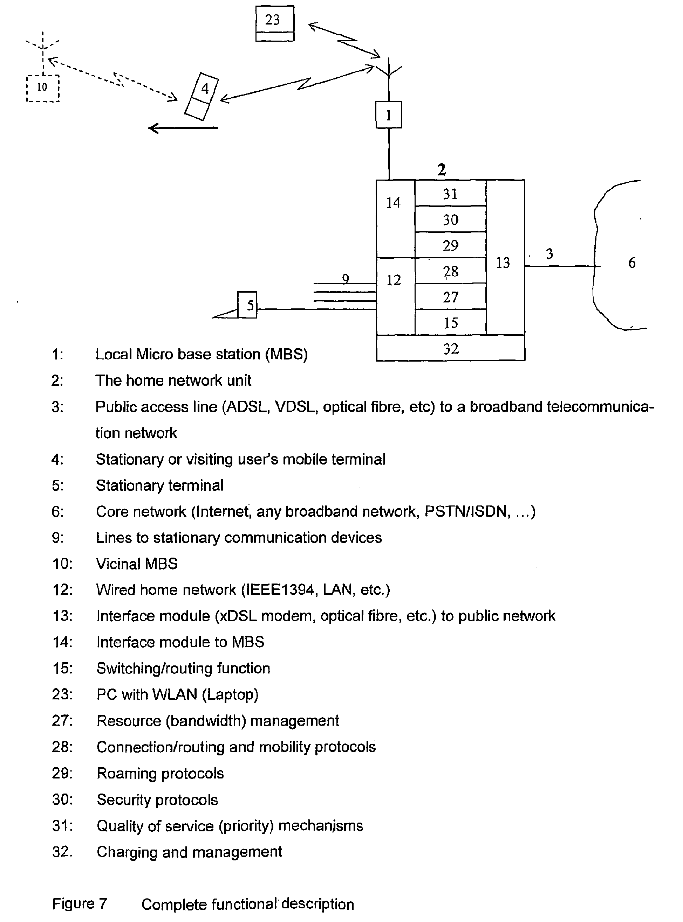

Figure 7 shows the same scenario as shown in Figure 5, but now enhanced with the function modules of Figure 6. A very simplified description follows.

A mobile user 4 has entered the coverage zone of the micro base station 1. While sensing radio coverage, the security module 30 performs access control and authentication. If module 30 does not recognize the mobile user 4, a request from module 29, Roaming protocols, will be sent over the public access line, 13/3 to its counterparts in the network to find out where the user belongs. When the user is recognized, connection set-up, 28, procedures are initiated. Resource management module, 27, and the Quality of service mechanisms, 31, are involved in these procedures to check whether there is bandwidth available on all sections from the mobile user and to the destination, and if the requested quality can be guaranteed. If all these procedures succeed, the Routing/switch module, 15, will establish the communication route through the Home Network Unit 2. Module 32, Charging and management notifies that a communication session from user 4 to a requested service, for instance Internet, has been initiated, and the agreed charging algorithms start.

In an additional scenario, a connection between the wireless Laptop 23 and the printer (stationary terminal 5) shall be established. Since both devices are connected to the same wireless LAN, pure Ad Hoc protocols can be used to establish the connection between them. Alternatively, the Home Network Unit may act as a server for the two clients, the Laptop and the printer. In both cases the security module 30 must authenticate the Laptop 23 and the resource module 27 must to update resource usage.

When the mobile user 4 enters inside the reach of the vicinal MBS 10, roaming and security procedures are activated in order to authenticate the user in the vicinal MBS 10. Upon success, the connection is established by involving the same modules as explained above. The mobile user is finally transferred to the new network segment and all resources of the first Home Network Unit 2, are released and made available for other users.

Having described embodiments of the invention it will be apparent to those skilled in the art that other embodiments incorporating the concepts may be used. These and other examples of the invention illustrated above are intended by way of example only and the actual scope of the invention is to be determined from the following claims.

## Claims

1. Method of using a wireless Local Area Network (LAN) for providing access to a fixed, broadband network (6) to roaming mobile terminals (4) via said wireless LAN, said wireless LAN being connected to a broadband access line (3) of said broadband network (6), the method comprising:
dividing a bandwidth of said wireless LAN and the broadband access line into respectively at least two channels;
allocating a first of said at least two channels to the provision of network access to terminals of a fixed subscriber; and
allocating a second of said at least two channels to the provision of wireless network access to said mobile terminals (4).

2. Method according to claim 1,
**characterized in that** said at least two channels are separate channels.

3. Method according to claim 1 or 2,
**characterized in that** said wireless LAN has a coverage zone at subscriber premises of said broadband network (6).

4. Method according to any one of claims 1 to 3,
**characterized in that** said wireless LAN is installed at said subscriber premises.

5. Method according to claim 3 or 4,
**characterized in that** said roaming mobile terminals (4) are casually passing through said coverage zone.

6. Method according to any one of claims 1 to 5,
**characterized in** dynamically dimensioning said at least two channels based on said subscriber's instantaneous traffic load on said broadband access line (3), wherein a remaining bandwidth is made available for said roaming mobile terminals (4).

7. Method according to any one of claims 1 to 6,
**characterized in** dynamically dimensioning said at least two channels based on said subscriber's instantaneous traffic load on said wireless LAN, wherein a remaining bandwidth is made available for said roaming mobile terminals (4).

8. Method according to claim 6 or 7,
**characterized in that** said remaining bandwidth includes a portion of the physical realisable bandwidth not subscribed for by said subscriber.

9. Method according to any one of claims 6 to 8,
**characterized in that** said remaining bandwidth includes a portion of the bandwidth subscribed for, but instantaneously unused by said subscriber.

10. Method according to any one of claims 6 to 9,
**characterized in that** said remaining bandwidth includes bandwidth that may be released due to priority mechanisms implemented in said broadband network.

11. Method according to any one of claims 1 to 10,
**characterized in** performing security and authentication functions securing said subscriber and said roaming mobile terminals (4) against tapping and illegal use of said broadband network (6).

12. Method according to any one of claims 1 to 11,
**characterized in** providing protocols in said wireless LAN and in said broadband network (6) for performing mobility, handover and roaming procedures.

13. Digital mobile broadband network providing mobile or nomadic broadband services based on an existing fixed, broadband network connected to at least one wireless local area network (LAN), each of said at least one wireless LAN being connected via a broadband access line (3) to said broadband network, wherein a bandwidth of said wireless LAN and broadband access line (3) is divided into at least two channels, a first of said at least two channels being allocated to the provision of network access to terminals of a fixed subscriber and a second of said at least two channels being allocated to the provision of wireless network access to roaming mobile terminals (4).

14. Broadband network according to claim 13,
**characterized in that** said at least two channels are dynamically dimensioned based on said subscriber's instantaneous traffic in the wireless LAN and over the broadband access line (3).

15. Broadband network according to claims 13 or 14,
**characterized in that** the second channel comprises a part of the physical realisable bandwidth not subscribed for by said subscriber, a part of the bandwidth subscribed for, but instantaneously unused by said subscriber and bandwidth released due to priority mechanisms implemented in the network.

16. Home network device (2) for separating traffic generated by terminals of a subscriber of a fixed, broadband network (6) from traffic generated by roaming mobile terminals (4), said device being connected to said broadband network (6) via a broadband access line (3), said device (2) comprising:
a wireless Local Area Network (LAN) for providing network access to said terminals of said subscriber and network access to roaming mobile terminals (4); and
appropriate traffic and control functions comprising a resource management system (27) and multiplexer means adapted to divide a physical available bandwidth of the wireless LAN and the broadband access line into at least two channels: a first channel allocated to traffic generated by terminals of said subscriber and a second channel allocated to traffic generated by roaming mobile terminals.

17. Home network device according to claim 16,
wherein said resource management system (27) is adapted to perform dynamical bandwidth allocation to said roaming mobile terminals based on said subscriber's instantaneous traffic load on said wireless LAN and said broadband access line (3).

18. Home network device according to any one of claims 16 to 17,
comprising switching/routing means (15) adapted to pass traffic to and from said broadband network and wireless terminals located within the coverage zone of the wireless LAN.

19. Home network device according to any one of claims 16 to 18,
comprising protocol means for seamless mobility and handover procedures maintaining a connection to said broadband network for a mobile terminal passing through said at least one wireless LAN.

20. Home network device according to any one of claims 16 to 19,
comprising protocol means for roaming between different fixed, network operators, P2P/Ad Hoc operators and said at least one wireless LAN.

21. Home network device according to any one of claims 16 to 20,
comprising function means (32) adapted to support the broadband network's management and charging requirements.

22. Use of a home network device (2) according to any one of claims 16 to 21,
for providing local wireless communication for said terminals of said subscriber and mobile broadband services to roaming wireless terminals (4).

## Patentansprüche

1. Verfahren zum Verwenden eines drahtlosen lokalen Netzwerks (LAN), um in Bewegung befindlichen (roaming), mobilen Endgeräten (4) über das drahtlose LAN einen Zugang zu einem stationären Breitbandnetz (6) zu verschaffen, wobei das drahtlose LAN mit einer Breitbandanschlußleitung (3) des Breitbandnetzes (6) verbunden ist,
wobei das Verfahren folgende Schritte aufweist:
- Teilen einer Bandbreite des drahtlosen LAN und der Breitband-Zugangsleitung in jeweils mindestens zwei Kanäle;
- Zuweisen eines ersten der mindestens zwei Kanäle, um Endgeräten eines stationären Teilnehmers einen Netzzugang zu verschaffen; und
- Zuweisen eines zweiten der mindestens zwei Kanäle, um den mobilen Endgeräten (4) einen drahtlosen Netzzugang zu verschaffen.

2. Verfahren nach Anspruch 1,
**dadurch gekennzeichnet,**
**daß** die mindestens zwei Kanäle separate Kanäle sind.

3. Verfahren nach Anspruch 1 oder 2,
**dadurch gekennzeichnet,**
**daß** das drahtlose LAN eine Abdeckungszone am Standort des Teilnehmers des Breitbandnetzes (6) aufweist.

4. Verfahren nach einem der Ansprüche 1 bis 3,
**dadurch gekennzeichnet,**
**daß** das drahtlose LAN am Standort des Teilnehmers installiert wird.

5. Verfahren nach einem der Ansprüche 1 bis 3,
**dadurch gekennzeichnet,**
**daß** die in Bewegung befindlichen mobilen Endgeräte (4) die Abdeckungszone beiläufig passieren.

6. Verfahren nach einem der Ansprüche 1 bis 5,
**gekennzeichnet durch** eine dynamische Dimensionierung der mindestens zwei Kanäle auf der Basis der momentanen Verkehrslast des Teilnehmers auf der Breitbandanschlußleitung (3), wobei eine verbleibende Bandbreite für die in Bewegung befindlichen, mobilen Endgeräte (4) zur Verfügung gestellt wird.

7. Verfahren nach einem der Ansprüche 1 bis 6,
**gekennzeichnet durch** eine dynamische Dimensionierung der mindestens zwei Kanäle auf der Basis der momentanen Verkehrslast des Teilnehmers auf dem drahtlosen LAN, wobei eine verbleibende Bandbreite für die in Bewegung befindlichen, mobilen Endgeräte (4) zur Verfügung gestellt wird.

8. Verfahren nach Anspruch 6 oder 7,
**dadurch gekennzeichnet,**
**daß** die verbleibende Bandbreite einen Bereich der physikalisch realisierbaren Bandbreite beinhaltet, die der Teilnehmer nicht abonniert hat.

9. Verfahren nach einem der Ansprüche 6 bis 8,
**dadurch gekennzeichnet,**
**daß** die verbleibende Bandbreite einen Bereich der Bandbreite beinhaltet, die der Teilnehmer abonniert hat, der jedoch derzeit nicht von dem Teilnehmer genutzt wird.

10. Verfahren nach einem der Ansprüche 6 bis 9,
**dadurch gekennzeichnet,**
**daß** die verbleibende Bandbreite eine Bandbreite beinhaltet, die aufgrund von in dem Breitbandnetz implementierten Prioritätsmechanismen freigegeben werden kann.

11. Verfahren nach einem der Ansprüche 1 bis 10,
**gekennzeichnet durch** die Ausführung von Sicherheits- und Authentifizierungsfunktionen zum Schützen des Teilnehmers und der in Bewegung befindlichen, mobilen Endgeräte (4) vor Anzapfung und illegaler Nutzung des Breitbandnetzes (6).

12. Verfahren nach einem der Ansprüche 1 bis 11,
**gekennzeichnet durch** die Bereitstellung von Protokollen in dem drahtlosen LAN und dem Breitbandnetz (6) für die Ausführung von Mobilitäts-, Übergabe- und Roaming-Vorgängen.

13. Digitales mobiles Breitbandnetz zur Schaffung von mobilen oder nomadisierenden Breitbanddiensten auf der Basis eines bestehenden, stationären Breitbandnetzes, das mit mindestens einem drahtlosen lokalen Netzwerk (LAN) verbunden ist, wobei jedes von dem mindestens einen lokalen Netzwerk über eine Breitbandanschlußleitung (3) mit dem Breitbandnetz verbunden ist, wobei eine Bandbreite des drahtlosen LAN und der Breitbandanschlußleitung (3) in mindestens zwei Kanäle aufgeteilt ist, wobei ein erster der mindestens zwei Kanäle zugewiesen wird, um Endgeräten eines stationären Teilnehmers einen Netzzugang zu verschaffen, und ein zweiter der mindestens zwei Kanäle zugewiesen wird, um in Bewegung befindlichen, mobilen Endgeräten (4) einen drahtlosen Netzzugang zu verschaffen.

14. Breitbandnetz nach Anspruch 13,
**dadurch gekennzeichnet,**
**daß** die mindestens zwei Kanäle auf der Basis des momentanen Verkehrs des Teilnehmers in dem drahtlosen LAN und über die Breitbandanschlußleitung (3) dynamisch dimensioniert werden.

15. Breitbandnetz nach Anspruch 13 oder 14,
**dadurch gekennzeichnet,**
**daß** der zweite Kanal einen Teil der physikalisch realisierbaren Bandbreite, die der Teilnehmer nicht abonniert hat, einen Teil der Bandbreite, die der Teilnehmer abonniert hat, der jedoch derzeit nicht von dem Teilnehmer genutzt wird, und eine Bandbreite aufweist, die aufgrund von in dem Netz implementierten Prioritätsmechanismen freigegeben wird.

16. Heimnetzwerkvorrichtung (2) zum Trennen von dem Verkehr, der von Endgeräten eines Teilnehmers eines stationären Breitbandnetzes generiert wird, von dem Verkehr, der von in Bewegung befindlichen, mobilen Endgeräten (4) generiert wird, wobei die Vorrichtung über eine Breitbandanschlußleitung (3) an das Breitbandnetz (6) angeschlossen ist und wobei die Vorrichtung (2) folgendes aufweist:
- ein drahtloses lokales Netzwerk (LAN), um den Endgeräten des Teilnehmers einen Netzzugang zu verschaffen und um in Bewegung befindlichen, mobilen Endgeräten (4) einen Netzzugang zu verschaffen; und
- geeignete Verkehrs- und Steuerfunktionen, die ein Ressourcen-Managementsystem (27) und eine Multiplexer-Einrichtung aufweisen, die dazu ausgebildet sind, eine physikalisch verfügbare Bandbreite des drahtlosen LAN und der Breitbandanschlußleitung in mindestens zwei Kanäle aufzuteilen, und zwar einen ersten Kanal, der dem von Endgeräten des Teilnehmers generiertem Verkehr zugewiesen wird, sowie einen zweiten Kanal, der dem Verkehr zugewiesen wird, der von in Bewegung befindlichen, mobilen Endgeräten generiert wird.

17. Heimnetzwerkvorrichtung nach Anspruch 16,
wobei das Ressourcen-Managementsystem (27) dazu ausgebildet ist, eine dynamische Bandbreitenzuweisung an die in Bewegung befindlichen, mobilen Endgeräte auf der Basis der momentanen Verkehrslast des Teilnehmers auf dem drahtlosen LAN und der Breitbandanschlußleitung (3) vorzunehmen.

18. Heimnetzwerkvorrichtung nach einem der Ansprüche 16 oder 17,
die eine Umschalt-/Leitweglenkungseinrichtung (15) aufweist, die dazu ausgebildet ist, den Verkehr zu und von dem Breitbandnetz und drahtlosen Endgeräten zu führen, die sich innerhalb der Abdeckungszone des drahtlosen LAN befinden.

19. Heimnetzwerkvorrichtung nach einem der Ansprüche 16 bis 18,
die eine Protokolleinrichtung für lückenlose Mobilitäts- und Übergabevorgänge aufweist, bei denen für ein mobiles Endgerät, das das mindestens eine drahtlose LAN passiert, eine Verbindung mit dem Breitbandnetz aufrechterhalten bleibt.

20. Heimnetzwerkvorrichtung nach einem der Ansprüche 16 bis 19,
die eine Protokolleinrichtung für das Roaming zwischen verschiedenen stationären Netzbetreibern, P2P/Ad-Hoc-Betreibern und dem mindestens einen drahtlosen LAN aufweist.

21. Heimnetzwerkvorrichtung nach einem der Ansprüche 16 bis 20,
die eine Funktionseinrichtung (32) aufweist, die dazu ausgebildet ist, die Breitbandnetz-Management- und Rechnungsstellungsanforderungen zu unterstützen.

22. Verwendung einer Heimnetzwerkvorrichtung (2) nach einem der Ansprüche 16 bis 21 zum Bereitstellen einer lokalen drahtlosen Verbindung für die Endgeräte des Teilnehmers und mobiler Breitbanddienste mit in Bewegung befindlichen, drahtlosen Endgeräten (4).

## Revendications

1. Méthode consistant à utiliser un réseau local (LAN) sans fil pour fournir l'accès à un réseau fixe à large bande (6) à des terminaux mobiles itinérants (4) par l'intermédiaire dudit réseau LAN sans fil, ledit réseau LAN sans fil étant relié à une ligne d'accès à large bande (3) dudit réseau à large bande (6), ladite méthode comprenant les étapes consistant à :
■ diviser une largeur de bande dudit réseau LAN sans fil et de la ligne d'accès à large bande en au moins deux canaux respectifs ;
■ affecter le premier desdits au moins deux canaux à la fourniture d'un accès réseau aux terminaux d'un abonné fixe ; et
■ affecter le second desdits au moins deux canaux à la fourniture d'un accès réseau sans fil auxdits terminaux mobiles (4).

2. Méthode selon la revendication 1, **caractérisée en ce que** lesdits au moins deux canaux sont des canaux séparés.

3. Méthode selon la revendication 1 ou 2, **caractérisée en ce que** ledit réseau LAN sans fil a une zone de couverture dans les locaux de l'abonné dudit réseau à large bande (6).

4. Méthode selon l'une quelconque des revendications 1 à 3, **caractérisée en ce que** ledit réseau LAN sans fil est installé dans lesdits locaux de l'abonné.

5. Méthode selon la revendication 3 ou 4, **caractérisée en ce que** lesdits terminaux mobiles itinérants (4) passent de manière temporaire à travers ladite zone de couverture.

6. Méthode selon l'une quelconque des revendications 1 à 5, **caractérisée en ce qu'**il consiste à dimensionner dynamiquement lesdits au moins deux canaux en fonction de la charge de trafic dudit abonné à un instant donné sur ladite ligne d'accès à large bande (3), en mettant la largeur de bande restante à la disposition desdits terminaux mobiles itinérants (4).

7. Méthode selon l'une quelconque des revendications 1 à 6, **caractérisée en ce qu'**il consiste à dimensionner dynamiquement lesdits au moins deux canaux en fonction de la charge de trafic dudit réseau LAN sans fil à un instant donné, en mettant la largeur de bande restante à la disposition desdits terminaux mobiles itinérants (4).

8. Méthode selon la revendication 6 ou 7, **caractérisée en ce que** ladite largeur de bande restante comprend une partie de la largeur de bande physique réalisable à laquelle ledit abonné ne s'est pas abonné.

9. Méthode selon l'une quelconque des revendications 6 à 8, **caractérisée en ce que** ladite largeur de bande restante comprend une partie de la largeur de bande à laquelle ledit abonné s'est abonné mais qu'il n'utilise pas à un instant donné.

10. Méthode selon l'une quelconque des revendications 6 à 9, **caractérisée en ce que** ladite largeur de bande restante comprend une largeur de bande susceptible d'être libérée par suite de mécanismes de priorité mis en oeuvre dans ledit réseau à large bande.

11. Méthode selon l'une quelconque des revendications 1 à 10, **caractérisée en ce que** qu'il exécute des fonctions de sécurité et d'authentification qui protègent ledit abonné et lesdits terminaux mobiles itinérants (4) contre les connexions clandestines et contre les utilisations illégales dudit réseau à large bande (6).

12. Méthode selon l'une quelconque des revendications 1 à 11, **caractérisée en ce que** qu'il prévoit dans ledit réseau LAN sans fil et dans ledit réseau à large bande (6) des protocoles permettant d'effectuer des opérations de mobilité, de transfert intercellulaire et d'itinérance.

13. Réseau numérique mobile à large bande fournissant des services à large bande mobiles ou nomades à partir d'un réseau fixe à large bande existant, relié à au moins un réseau local (LAN) sans fil, ledit au moins un réseau LAN sans fil étant relié par l'intermédiaire d'une ligne d'accès à large bande (3) audit réseau à large bande, dans lequel une largeur de bande dudit réseau LAN sans fil et de ladite ligne d'accès à large bande (3) est divisée en au moins deux canaux, le premier desdits au moins deux canaux étant affecté à la fourniture d'un accès réseau aux terminaux d'un abonné fixe et le second desdits au moins deux canaux étant affecté à la fourniture d'un accès réseau sans fil à des terminaux mobiles itinérants (4).

14. Réseau à large bande selon la revendication 13, **caractérisé en ce que** lesdits au moins deux canaux sont dimensionnés dynamiquement en fonction de la charge de trafic dudit abonné à un instant donné dans le réseau LAN sans fil et sur la ligne d'accès à large bande (3).

15. Réseau à large bande selon les revendications 13 ou 14, **caractérisé en ce que** le second canal comprend une partie de la largeur de bande physique réalisable à laquelle ledit abonné ne s'est pas abonné, une partie de la largeur de bande à laquelle ledit abonné s'est abonné mais qu'il n'utilise pas à un instant donné, et une largeur de bande libérée par suite de mécanismes de priorité mis en oeuvre dans le réseau.

16. Périphérique réseau domestique (2) destiné à séparer le trafic engendré par les terminaux d'un abonné à un réseau à large bande fixe (6) du trafic engendré par des terminaux mobiles itinérants (4), ledit périphérique étant relié audit réseau à large bande (6) par l'intermédiaire d'une ligne d'accès à large bande (3), ledit périphérique (2) comprenant :
■ un réseau local (LAN) sans fil pour fournir un accès réseau auxdits terminaux dudit abonné et un accès réseau à des terminaux mobiles itinérants (4) ; et
■ des fonctions appropriées de trafic et de commande comprenant un système de gestion des ressources (27) et des moyens de multiplexage aptes à diviser une largeur de bande physique disponible du réseau LAN sans fil et de la ligne d'accès à large bande en au moins deux canaux : un premier canal affecté au trafic engendré par les terminaux dudit abonné et un second canal affecté au trafic engendré par des terminaux mobiles itinérants.

17. Périphérique réseau domestique selon la revendication 16, dans lequel ledit système de gestion des ressources (27) est apte à effectuer une affectation dynamique de largeur de bande auxdits terminaux mobiles itinérants en fonction de la charge de trafic de l'abonné à un instant donné sur ledit réseau LAN sans fil et sur ladite ligne d'accès à large bande (3).

18. Périphérique réseau domestique selon l'une quelconque des revendications 16 et 17, comprenant des moyens de commutation ou de routage (15) aptes à faire passer un trafic alternativement entre ledit réseau à large bande et des terminaux sans fil situés à l'intérieur de la zone de couverture du réseau LAN sans fil.

19. Périphérique réseau domestique selon l'une quelconque des revendications 16 à 18, comprenant des moyens de protocole pour une mobilité continue et des procédures de transfert intercellulaire conservant la liaison audit réseau à large bande pour un terminal mobile passant à travers ledit au moins un réseau LAN sans fil.

20. Périphérique réseau domestique selon l'une quelconque des revendications 16 à 19, comprenant des moyens de protocole pour une itinérance entre différents opérateurs de réseaux fixes, opérateurs de réseaux P2P ou ad hoc et ledit au moins un réseau LAN sans fil.

21. Périphérique réseau domestique selon l'une quelconque des revendications 16 à 20, comprenant des moyens de fonction (32) aptes à prendre en charge les exigences de gestion et de charge du réseau à large bande.

22. Utilisation d'un périphérique réseau domestique (2) selon l'une quelconque des revendications 16 à 21, pour assurer une communication sans fil locale pour lesdits terminaux dudit abonné et fournir des services mobiles à large bande à des terminaux sans fil itinérants (4).
